# EUROPÄISCHE PATENTANMELDUNG

(11) **EP 4 796 723 A1**
(43) Veröffentlichungstag der Anmeldung: **26.08.2026**
(21) Anmeldenummer: 26158934.5
(22) Anmeldetag: 17.02.2026
(51) Int. Cl.: E04B 5/04, C04B 18/10, C04B 20/00, E04B 5/26, E04B 5/32

(54) **BETONVERDRÄNGUNGSKÖRPER, BETONTEIL, VERFAHREN ZUM HERSTELLEN EINES BETONTEILS SOWIE VERWENDUNG EINES BETONVERDRÄNGUNGSKÖRPERS**

(30) Priorität: 25.02.2025 DE 102025107010
(71) Anmelder: GOLDBECK GmbH, 33649 Bielefeld (DE)
(72) Erfinder: Oberndorfer, Thomas, 33335 Gütersloh (DE); Remitz, Jörn, 33813 Oerlinghausen (DE)
(74) Vertreter: Cohausz & Florack

(57) **Zusammenfassung**

Die Erfindung betrifft einen Betonverdrängungskörper (2) zur Einbringung in ein Betonteil (8). Die Erfindung betrifft ebenfalls ein Betonteil (8), Verfahren zum Herstellen eines Betonteils (8) sowie die Verwendung eines Betonverdrängungskörpers (2).

## Beschreibung

Die Erfindung betrifft einen Betonverdrängungskörper zur Einbringung in ein Betonteil. Die Erfindung betrifft ebenfalls ein Betonteil, insbesondere zur Verwendung als Strukturbauteil, zur Aufnahme von Lasten. Die Erfindung betrifft weiterhin Verfahren zum Herstellen eines Betonteils sowie die Verwendung eines Betonverdrängungskörpers.

Betonteile als solche sind in hinreichender Weise aus dem Stand der Technik bekannt. Betonteile werden in der Bauindustrie seit Jahrzehnten erfolgreich eingesetzt, um tragende und nicht tragende Strukturen wirtschaftlich und effizient zu errichten. Sie finden Anwendung in Bereichen wie Brückenbau, Gebäudekonstruktionen und Verkehrsinfrastrukturen, wo hohe Belastbarkeit und lange Lebensdauer gefordert sind. Betonteile, welche tragende Strukturen abbilden, werden auch als Strukturbauteile bezeichnet.

Derartige Betonteile sind üblicherweise als massive Bauteile ausgeführt, wodurch auch in Bereichen des Betonteils, in denen eine massive Ausgestaltung zur Erreichung der statischen Anforderungen nicht erforderlich ist, dennoch erhebliche Mengen an Beton verwendet werden. Dies trifft insbesondere auf den Kernbereich von Decken-, Wand- und Stützenbauteilen zu. Neben zusätzlichen Kosten für die erhöhte Verwendung von Beton ist dies auch unter klimatechnischen Gesichtspunkten nachteilig.

Um dem übermäßigen Einsatz von Beton entgegenzuwirken, werden in der Praxis bereits Hohldecken eingesetzt, bei denen durch das Einbringen von Hohlkörpern die Betonmenge reduziert werden kann. Hierbei erfolgt die Herstellung der Hohldecken entweder im Stranggussverfahren, welches allerdings mit deutlichen Geometrieeinschränkungen einhergeht, oder im Umlaufverfahren, wie es beispielsweise im Vollert-Deckensystem Anwendung findet. Letzteres ermöglicht zwar eine geometrische Anpassung der Bauteile, führt jedoch zu einem erhöhten Produktionsaufwand und damit zu einer komplexeren Fertigung.

Davon ausgehend liegt der vorliegenden Erfindung die Aufgabe zugrunde, einen Betonverdrängungskörper zur Einbringung in ein Betonteil, ein Betonteil, ein Verfahren zur Herstellung eines Betonteils und eine Verwendung eines Betonverdrängungskörpers anzugeben, welche eine umweltfreundliche und ressourcenschonende Alternative zu bestehenden Betonverdrängungskörpern bzw. Betonteilen bieten.

Gemäß einem ersten Aspekt der vorliegenden Erfindung wird die vorgenannte Aufgabe durch einen Betonverdrängungskörper zur Einbringung in ein Betonteil gelöst, wobei der Betonverdrängungskörper Biokohle, vorzugsweise gepresste Biokohle, insbesondere zumindest 70 Gew.-% Biokohle, umfasst, und wobei der Betonverdrängungskörper als Vollmaterial ausgestaltet ist.

Hierdurch kann ein Betonverdrängungskörper zur Einbringung in ein Betonteil zur Verfügung gestellt werden, der eine umweltfreundliche und ressourcenschonende Alternative zu bereits bestehenden Betonverdrängungskörpern bietet.

Biokohle, insbesondere Pflanzenkohle oder Synthesekohle, ist ein kohlenstoffreiches Material, das beispielsweise durch die pyrolytische Umsetzung von Bio-Material, wie beispielsweise organischem Pflanzenmaterial oder anderen Materialien, unter sauerstoffarmen Bedingungen erzeugt wird. Bei diesem thermochemischen Prozess werden flüchtige Bestandteile weitgehend entfernt, sodass ein hoher, stabilisierter Kohlenstoffanteil zurückbleibt. Neben der konventionellen Herstellung aus pflanzlichen Biomassen kann Biokohle beispielsweise auch unter Verwendung von atmosphärischem CO₂ erzeugt werden, wodurch die CO₂-Bindung des Betonverdrängungskörpers weiter verbessert werden kann.

Typischerweise können pro Kilogramm Biokohle bis zu ca. 3,5 Kilogramm CO₂ gebunden werden, was sie zu einem umweltfreundlichen Werkstoff macht. Darüber hinaus kann die Verwendung von Biokohle aufgrund ihrer porösen Struktur und hohen spezifischen Oberfläche als funktionelle Komponente in Betonverdrängungskörpern zu materialoptimierten Betonteilen beitragen. Insbesondere kann durch die Verwendung von Betonverdrängungskörpern umfassend Biokohle in günstiger Weise ein Betonverdrängungskörper zur Einbringung in ein Betonteil zur Verfügung gestellt werden, welcher zudem zur Reduktion von CO₂ beiträgt. Weiterhin können durch das Einbringen der Betonverdrängungskörper aus Biokohle die schallschutztechnischen und schwingungstechnischen Eigenschaften der Betonteile positiv beeinflusst werden.

In diesem Zusammenhang hat es sich als vorteilhaft herausgestellt, dass der Betonverdrängungsköper zumindest 70 Gew.-% Biokohle, insbesondere 80 Gew.-% Biokohle, besonders bevorzugt zumindest 90 Gew.-% Biokohle, umfasst. Hierdurch können vorbeschriebene, im Zusammenhang mit der Verwendung von Biokohle genannten, Vorteile in hinreichender Weise genutzt werden.

Vorzugsweise ist der Betonverdrängungskörper als Vollmaterial ausgestaltet. Dies bedeutet vorliegend insbesondere, dass der Betonverdrängungskörper im Wesentlichen vollständig aus einem im Wesentlichen homogenen, festen Material ohne Hohlräume oder Aussparungen besteht. Ohne Hohlräume bezieht sich dabei vorzugsweise auf Hohlräume, die nicht bloß durch die Porosität des für den Betonverdrängungskörper verwendeten Materials zustande kommen. Durch die Ausgestaltung des Betonverdrängungskörpers als Vollmaterial kann zudem eine im Wesentlichen einheitliche mechanische Festigkeit des Betonverdrängungskörpers und ein vorteilhaftes CO₂-Senkpotential des Betonverdrängungskörpers ermöglicht werden.

Eine weitere bevorzugte Ausgestaltung ist dadurch gekennzeichnet, dass der Betonverdrängungskörper eine Dichte zwischen 1 g/cm³ und 2 g/cm³, insbesondere zwischen 1 g/cm³ und 1,4 g/cm³, aufweist. Vorgenannte Dichte des Betonverdrängungskörpers kann ermöglichen, dass der Betonverdrängungskörper einerseits leicht genug ist, um das Gewicht des Betonteils nicht zu sehr zu erhöhen, und andererseits über ausreichend mechanische Festigkeit sowie Formstabilität verfügt, um den statischen Anforderungen im Betonteil gerecht zu werden. Somit kann ein leichter und dennoch stabiler Verdrängungskörper zur Verfügung gestellt werden, welcher die Verwendung von weniger Beton ermöglicht, während gleichzeitig das CO₂-Senkpotenzial der Biokohle effektiv genutzt werden kann. Insbesondere wird die vorgenannte Dichte zur Verfügung gestellt, indem gepresste Biokohle und/oder verdichtete Biokohle für den Betonverdrängungskörper verwendet wird.

Eine weitere bevorzugte Ausgestaltung ist dadurch gekennzeichnet, dass die Biokohle feine Biokohle mit einer Partikelgröße von weniger als 0,5 mm umfasst. Feine Biokohle zeichnet sich durch eine sehr hohe spezifische Oberfläche aus, was zu einer verbesserten Haftung an Bindemitteln sowie zu einer erhöhten CO₂-Aufnahme führt. Diese Eigenschaft ist insbesondere für die Nutzung als CO₂-Senke von Vorteil.

Eine weitere bevorzugte Ausgestaltung ist dadurch gekennzeichnet, dass die Biokohle grobe Biokohle mit einer Partikelgröße zwischen 0,5 mm und 5 mm umfasst. Grobe Biokohle kann aufgrund ihrer größeren Partikelgröße zur mechanischen Stabilität und Formstabilität des Verdrängungskörpers beitragen.

Bei der Partikelgröße handelt es sich insbesondere um den Durchmesser oder die längste Ausdehnung einzelner Partikel. Beispielsweise kann die Partikelgröße auch Korngröße genannt werden.

Eine weitere bevorzugte Ausgestaltung ist dadurch gekennzeichnet, dass der Betonverdrängungskörper zumindest ein Bindemittel umfasst. Das Hinzufügen eines Bindemittels kann zur Erhöhung der mechanischen Stabilität und der homogenen Materialstruktur des Betonverdrängungskörpers beitragen. Insbesondere kann eine verbesserte Verbindung zwischen den einzelnen Partikeln der Biokohle und eventuellen weiteren Zuschlagstoffen verbessert werden, wodurch die Festigkeit und Formstabilität des Betonverdrängungskörpers optimiert werden können. Beispielsweise können die Biokohle, das zumindest eine Bindemittel und/oder weitere Zuschlagsstoffe ein Innenteil der Betonverdrängungskörpers bilden.

Eine weitere bevorzugte Ausgestaltung ist dadurch gekennzeichnet, dass das Bindemittel vorzugsweise eine natürliche und/oder eine mineralische Substanz, insbesondere Stärke, Lignin, natürliche Harze, Ton, Zement, Natriumhydroxid und/oder Kalziumhydroxid, umfasst. Natürliche Bindemittel, wie Stärke, Lignin und natürliche Harze, können insbesondere die Kohäsion und Haftung der einzelnen Partikel der Biokohle fördern, während mineralische Bindemittel wie Ton, Zement, Natriumhydroxid und Kalziumhydroxid die Festigkeit und chemische Beständigkeit des Verdrängungskörpers erhöhen können.

Eine weitere bevorzugte Ausgestaltung ist dadurch gekennzeichnet, dass der Betonverdrängungskörper 5 bis 20 Gew.-% Bindemittel umfasst. Hierdurch kann eine verbesserte Verbindung zwischen den einzelnen Biokohlepartikeln und möglichen weiteren Zuschlagstoffen erreicht werden, wodurch die mechanische Stabilität und Formstabilität des Verdrängungskörpers verbessert werden können. Ein Anteil von 5 bis 20 Gew.-% Bindemittel kann die erforderliche Festigkeit erzielen, ohne die positiven Eigenschaften der Biokohle, wie ihre CO₂-Bindungskapazität und ihre poröse Struktur, wesentlich zu beeinträchtigen.

Eine weitere bevorzugte Ausgestaltung ist dadurch gekennzeichnet, dass der Betonverdrängungskörper eine Oberflächenbehandlung aufweist. Durch die Oberflächenbehandlung kann beispielsweise die Haftung zwischen dem Betonverdrängungskörper und dem umgebenden Beton verbessert, was zu einer gleichmäßigeren Verteilung der Lasten und zu einer gesteigerten mechanischen Stabilität des Betonteils beiträgt.

Eine weitere bevorzugte Ausgestaltung ist dadurch gekennzeichnet, dass das Mittel zur Oberflächenbehandlung eine hydrophobe und/oder hydrophile Substanz, insbesondere Kalziumhydroxid, Silane, Silikate, Zementleim, Polymere und/oder Naturharze, umfasst.

Die Wahl der Oberflächenbehandlung kann von den spezifischen Anforderungen an den Betonverdrängungskörper abhängen.

Hydrophile Substanzen, wie Kalziumhydroxid oder Silikate, können die Benetzbarkeit der Oberfläche verbessern und dadurch eine bessere Anbindung an die umgebende Betonmatrix ermöglichen. Dies kann zu einer optimierten Lastübertragung zwischen dem Verdrängungskörper und dem Beton sowie zu einer erhöhten mechanischen Stabilität des gesamten Betonteils führen.

Hydrophobe Substanzen, wie Silane oder bestimmte Polymere, können hingegen die Wasseraufnahme des Betonverdrängungskörpers reduzieren. Dies kann insbesondere dann vorteilhaft sein, wenn der Betonverdrängungskörper in Betonteilen verwendet wird, welche Umgebungen mit hoher Feuchtigkeit oder wechselnden Witterungsbedingungen ausgesetzt sind.

Zusätzlich können Zementleim oder Naturharze als Haftvermittler dienen, um die Verbindung zwischen dem Verdrängungskörper und der Betonmatrix weiter zu verbessern.

Durch die gezielte Wahl und/oder Kombination vorgenannter Haftvermittler kann die Funktionalität des Betonverdrängungskörpers an verschiedene Einsatzbereiche angepasst werden, was sowohl die strukturelle Integrität als auch die ökologische Nachhaltigkeit der Betonteile weiter verbessern kann.

Eine weitere bevorzugte Ausgestaltung ist dadurch gekennzeichnet, dass der Betonverdrängungskörper eine Umhüllung, insbesondere eine im Wesentlichen vollständige Umhüllung, aufweist. Beispielsweise kann die Verwendung einer Umhüllung oder Hülle die strukturelle Integrität des Betonverdrängungskörpers verbessern und zudem eine Versieglung gegenüber Umwelteinflüssen, beispielsweise gegenüber Wasser, ermöglichen. Beispielsweise kann durch eine Umhüllung erreicht werden, dass der Betonverdrängungskörper während des Betonierens seine Form beibehält. Dies ist insbesondere bei dem Betonverdrängungskörpern aus Biokohle von Vorteil, da deren poröse Struktur andernfalls Flüssigkeiten aufnehmen könnte.

Eine weitere bevorzugte Ausgestaltung ist dadurch gekennzeichnet, dass die Umhüllung eine Folie, insbesondere eine Kunststofffolie, eine biologisch abbaubare Folie, ein Textilgewebe, ein Papierverbundstoff und/oder einer Beschichtung aus natürlichen oder synthetischen Polymeren umfasst.

Die Wahl des Umhüllungsmaterials kann je nach den spezifischen Anforderungen an die Verarbeitung und die funktionalen Eigenschaften des Betonverdrängungskörpers variieren.

Kunststofffolien, insbesondere solche aus Polyethylen (PE) oder Polypropylen (PP), bieten eine hohe Widerstandsfähigkeit gegenüber Feuchtigkeit und können dazu beitragen dafür, dass der Verdrängungskörper während des Betonierens seine Form behält. Alternativ kann der Einsatz von biologisch abbaubaren Folien aus PLA (Polylactid) oder Stärke-basierten Polymeren eine umweltfreundliche Lösung darstellen, insbesondere wenn eine nachhaltige Materialwahl im Vordergrund steht.

Ein weiteres bevorzugtes Umhüllungsmaterial ist ein Textilgewebe, das aus Naturfasern (z. B. Baumwolle, Jute oder Hanf) oder synthetischen Fasern (z. B. Glasfaser, Carbonfaser oder Polyester) bestehen kann. Solche Gewebe bieten eine hohe mechanische Festigkeit und können die Einbindung des Verdrängungskörpers in die Betonmatrix verbessern sowie die Bewehrungslagen des Betonteils verstärken. Darüber hinaus kann die Umhüllung aus einem Papierverbundstoff bestehen, der durch spezielle Imprägnierungen wasserabweisend oder diffusionsoffen gestaltet werden kann. Solche Materialien ermöglichen eine kontrollierte Wasseraufnahme und -abgabe und tragen zur Stabilität des Verdrängungskörpers bei.

Alternativ kann die Umhüllung auch durch eine Beschichtung aus natürlichen oder synthetischen Polymeren realisiert werden. Natürliche Polymere wie Lignin, Kautschuk oder Schellack bieten eine ökologische Alternative zu synthetischen Beschichtungen, während synthetische Polymere wie Polyurethan oder Epoxidharz für eine erhöhte Widerstandsfähigkeit gegenüber Feuchtigkeit und mechanischen Belastungen sorgen können.

Eine weitere bevorzugte Ausgestaltung ist dadurch gekennzeichnet, dass der Betonverdrängungskörper eine zylindrische Form, insbesondere eine zylindrische Form mit zwei im Wesentlichen parallel zueinander verlaufenden Stirnseiten, aufweist. Durch eine rotationssymmetrische zylindrische Form kann sich der Verdrängungskörper besonders effizient in Schalungen oder vorgefertigte Betonformen einbringen lassen. Zudem kann eine solche Form beispielsweise durch Strangpressverfahren oder durch Pressformen aus gepresster Biokohle hergestellt werden, was eine wirtschaftliche und reproduzierbare Fertigung ermöglicht. Beispielsweise kann der Betonverdrängungskörper auch kugelförmig oder quaderförmig ausgebildet sein.

Gemäß einem zweiten Aspekt der vorliegenden Erfindung wird die vorgenannte Aufgabe durch ein Betonteil, insbesondere zur Verwendung als Strukturbauteil, zur Aufnahme von Lasten, umfassend zumindest einen vorgenannten Betonverdrängungskörper gelöst.

Die vorstehend im Zusammenhang mit dem Betonverdrängungskörper genannten technischen Effekte sowie Vorteile gelten gleichermaßen für das Betonteil.

Bei dem Betonteil kann es sich beispielsweise um ein Betonfertigteil oder um ein aus Ortbeton hergestelltes Betonteil handeln. Betonfertigteile oder Ortbetonteile können beispielsweise schlaff bewehrt oder vorgespannt sein.

Als Beton ist insbesondere ein Baustoff zu verstehen, der als Dispersion unter Zugabe von Flüssigkeit aus einem Bindemittel, Zuschlagstoffen und Zusatzmitteln angemischt werden kann. Beispielsweise kann als Bindemittel Zement und als Zuschlagsstoff Sand, Kies und/oder Split verwendet werden. Beispielsweise ist es bevorzugt, dass die Zuschlagsstoffe ein Größtkorn von höchstens 32 mm, insbesondere ein Größtkorn von höchstens 16 mm aufweisen. Beispielsweise kann der Beton als Feinkornbeton ausgebildet sein.

Eine weitere bevorzugte Ausgestaltung ist dadurch gekennzeichnet, dass das Betonteil, ohne Berücksichtigung des Betonverdrängungskörpers und einer potenziellen Bewehrung, folgende Zusammensetzung umfasst:
- 10 bis 30 Gew.-% Zement;
- 5 bis 10 Gew.-% Wasser;
- 60 bis 80 Gew.-% Gesteinskörnung; und
- 0,01 bis 1,5 Gew.-% Zusatzmittel.

Vorgenannte Zusammensetzung ist vorteilhaft hinsichtlich der mechanischen Eigenschaften, der Haltbarkeit und der Verarbeitbarkeit des Betonteils.

Zement ist der Hauptbestandteil des Betons und dient als Bindemittel, das die anderen Komponenten zusammenhält und die gewünschte Festigkeit ermöglicht. Die Menge von 10 bis 30 Gew.-% ermöglicht, dass der Beton die notwendige Festigkeit und Stabilität aufweist, um den strukturellen Anforderungen zu entsprechen, während gleichzeitig eine ausreichende Verarbeitbarkeit erhalten bleibt.

Zement kann gemäß der EN 197-1 Norm (Europäische Norm für "Gemeiner Portlandzement") ein Bindemittel sein, das beispielsweise durch das Mahlen von Klinker, der aus einer Mischung von Kalkstein, Ton und anderen mineralischen Materialien gewonnen werden kann, insbesondere zusammen mit einer geringen Menge an Gips hergestellt werden kann. Die EN 197-1 definiert Zement als ein Material, das durch Reaktion mit Wasser eine feste, widerstandsfähige Masse bildet und als Bindemittel in Beton, Mörtel und anderen Zementprodukten verwendet wird. Insbesondere ist es bevorzugt, dass ein Puzzolanzement und/oder ein latent hydraulischer Zement verwendet wird.

Bei den vorgenannten Zusatzmitteln kann es sich insbesondere um Fließmittel handeln, welches die Fließfähigkeit und die Verarbeitbarkeit des Betons verbessert.

Vorzugsweise kann das Betonteil zusätzlich zu der vorgenannten Zusammensetzung, ohne Berücksichtigung des Betonverdrängungskörpers umfassen: 5 bis 15 Gew.-% Zusatzstoffe.

Bei den vorgenannten Zusatzstoffen kann es sich beispielsweise um Kalksteinmehl und/oder Flugasche handeln. Alternativ oder zusätzlich kann auch Mikrosilika als Zusatzstoff verwendet werden. Zusatzstoffe sind Materialien, die dem Beton zugesetzt werden, um dessen Eigenschaften gezielt zu verbessern. Kalksteinmehl kann beispielsweise als Füllstoff eingesetzt werden und hierdurch die Kornverteilung verbessern und die Dichte des Betons erhöhen. Flugasche kann beispielsweise die Verarbeitbarkeit des Frischbetons verbessern. Mikrosilika kann beispielsweise die Porosität der Betons reduzieren und hierdurch die Dichte des Betons erhöhen.

Eine weitere bevorzugte Ausgestaltung ist dadurch gekennzeichnet, dass das Betonteil zumindest eine Bewehrungslage, insbesondere zumindest zwei Bewehrungslagen umfasst. Die zumindest eine Bewehrungslage kann beispielsweise durch Stahlstäbe oder -matten; Carbonmatten, Glasfasermatten und/oder Basaltmatten gebildet werden.

Mittels der zumindest einen Bewehrungslage kann eine mechanische Verstärkung ermöglicht werden, die die Tragfähigkeit und Stabilität des Betonteils weiter erhöht.

Eine weitere bevorzugte Ausgestaltung ist dadurch gekennzeichnet, dass der zumindest eine Betonverdrängungskörper zwischen den zumindest zwei Bewehrungslagen angeordnet ist. Indem der Verdrängungskörper zwischen den Bewehrungslagen positioniert wird, kann eine strukturelle Integrität des Betonteils erhalten bleiben, während gleichzeitig eine Materialeinsparung erzielt werden kann. Ein weiterer Vorteil dieser Anordnung besteht darin, dass die Bewehrungslagen den Verdrängungskörper mechanisch fixieren und ihn während des Betonierens in der gewünschten Position halten können. Dadurch kann sichergestellt werden, dass der Verdrängungskörper nicht aufschwimmt oder seine Lage verändert, was zu einer gleichmäßigen Betonverteilung und einer verbesserten Bauteilqualität führt. Vorzugsweise sind alle in das Betonteil eingebrachten Betonverdrängungskörper zwischen Bewehrungslagen des Betonteils angeordnet.

Gemäß einem dritten Aspekt der Erfindung wird die vorgenannte Aufgabe gelöst durch ein Verfahren zum Herstellen eines Betonteils, insbesondere eines vorgenannten Betonteils, umfassend die Schritte: Bereitstellen von Biokohle, optionales Vermischen zumindest eines Bindemittels mit der Biokohle, Verpressen der Biokohle zu zumindest einem Betonverdrängungskörper, insbesondere zu zumindest einem vorgenannten Betonverdrängungskörper, Einlegen und Fixieren des zumindest einen Betonverdrängungskörpers in eine Schalung, insbesondere in eine mit zumindest zwei Bewehrungslagen versehene Schalung, Einbringen von Beton in die mit dem zumindest einen eingelegten und fixierten Betonverdrängungskörper versehene Schalung, und Aushärten des in die Schalung eingebrachten Beton zu einem Betonteil.

Eine weitere bevorzugte Ausgestaltung ist dadurch gekennzeichnet, dass die die Oberfläche, insbesondere die äußere Oberfläche, der verpressten Biokohle mit einer Oberflächenbehandlung behandelt wird.

Eine weitere bevorzugte Ausgestaltung ist dadurch gekennzeichnet, dass die Biokohle beim Verpressen in eine Umhüllung eingepresst wird.

Die im Zusammenhang mit vorgenanntem Betonverdrängungskörper sowie mit vorgenanntem Betonteil genannten Vorteile und Merkmal gelten gleichermaßen für vorgenanntes Verfahren zum Herstellen eine Betonteils.

Gemäß einem vierten Aspekt der Erfindung wird die vorgenannte Aufgabe gelöst durch ein Verfahren zum Herstellen eines Betonteils, insbesondere eines vorgenannten Betonteils, umfassend die Schritte: Bereitstellen von Biokohle, optionales Vermischen zumindest eines Bindemittels mit der Biokohle, additive Fertigung, insbesondere 3D-Drucken, der Biokohle zu zumindest einem Betonverdrängungskörper, insbesondere zu zumindest einem vorgenannten Betonverdrängungskörper, in eine Schalung, insbesondere in eine mit zumindest zwei Bewehrungslagen versehene Schalung, Einbringen von Beton in die mit dem zumindest einen gedruckten Betonverdrängungskörper versehene Schalung, und Aushärten des in die Schalung eingebrachten Beton zu einem Betonteil.

Die additive Fertigung des Betonverdrängungskörpers ermöglicht eine besonders präzise, flexible und ressourcenschonende Herstellung. Durch den schichtweisen Aufbau kann der Verdrängungskörper an die geometrischen Anforderungen des Betonteils angepasst werden. Zudem lassen sich komplexe Strukturen realisieren, die mit konventionellen Verfahren nur schwer herstellbar wären. Bei der additiven Fertigung kann es sich beispielsweise um sogenannte generative Fertigung handeln, welche insbesondere extrusionsbasiert durchgeführt werden kann. Beispielsweise kann es sich bei der additiven Fertigung auch um 3D-Druck handeln.

Die Biokohle kann in Form eines pastösen oder granulierten Druckmaterials verarbeitet werden, das mit einem Bindemittel und/oder einer anderen Zuschlagsstoffen versetzt wird, um eine ausreichende Stabilität während des Druckprozesses zu gewährleisten.

Durch den direkten Druck in die Schalung entfällt die Notwendigkeit einer separaten Fertigung und Lagerung der Verdrängungskörper. Dies reduziert Transport- und Handlingsaufwand und ermöglicht eine nahtlose Integration in bestehende Fertigungsprozesse. Insbesondere bei der Herstellung von Betonteilen mit Bewehrung bietet dieses Verfahren den Vorteil, dass der Verdrängungskörper gezielt zwischen den Bewehrungslagen positioniert werden kann.

Gemäß einem fünften Aspekt der Erfindung wird die vorgenannte Aufgabe gelöst durch eine Verwendung eines vorgenannten Betonverdrängungskörpers in einem vorgenannten Betonteil.

Die im Zusammenhang mit vorgenanntem Betonverdrängungskörper sowie mit vorgenanntem Betonteil genannten Vorteile und Merkmal gelten gleichermaßen für vorgenannte Verwendung eines Betonverdrängungskörpers.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der Erfindung beispielhaft widerspiegeln. Insbesondere sollen Merkmale, die in den Figuren enthalten sind, keineswegs als notwendiger Bestandteil der vorliegenden Erfindung erachtet werden. Die Reihenfolge der einzelnen Schritte in den dargestellten Verfahrensübersichten gibt nicht notwendigerweise die tatsächliche (zeitliche) Reihenfolge der Schritte vor und ist lediglich beispielhaft. Nichtsdestotrotz können die Schritte zeitlich in genau der Abfolge auftreten/durchgeführt werden, wie sie in den dargestellten Verfahrensübersichten dargestellt sind. Darüber hinaus können, müssen sie aber nicht in Reaktion aufeinander durchgeführt werden.

### Es zeigen

- Fig. 1: eine perspektivische Ansicht eines Ausführungsbeispiels eines Betonverdrängungskörpers;
- Fig. 2: eine Querschnittsansicht eines Ausführungsbeispiels eines Betonteils;
- Fig. 3: eine Draufsicht des in Fig. 2 dargestellten Ausführungsbeispiels des Betonteils;
- Fig. 4: ein Flussdiagramm eines ersten Ausführungsbeispiels eines Verfahrens zum Herstellen eines Betonteils; und
- Fig. 5: ein Flussdiagramm eines zweiten Ausführungsbeispiels eines Verfahrens zum Herstellen eines Betonteils.

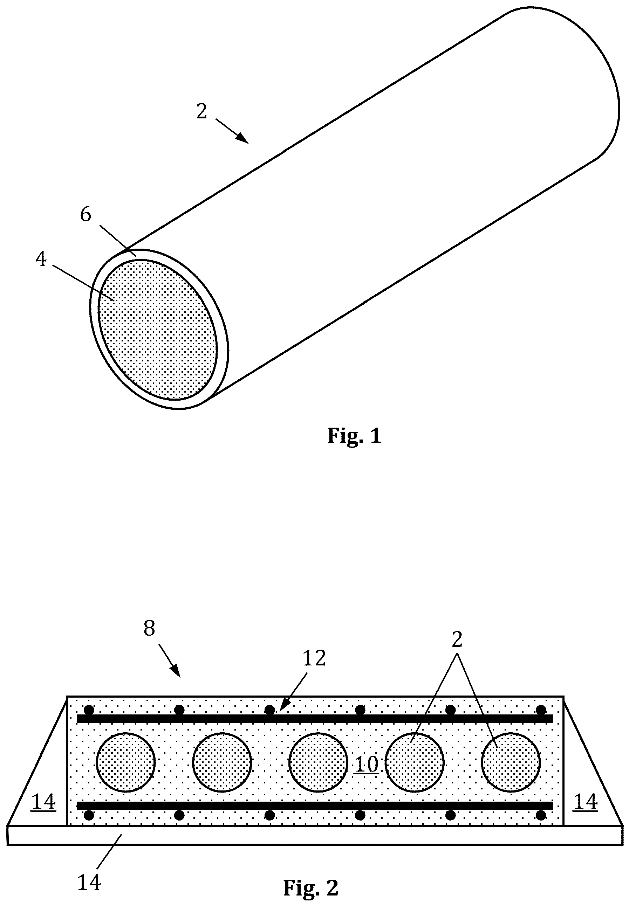

Fig. 1 zeigt eine perspektivische Ansicht eines Ausführungsbeispiels eines Betonverdrängungskörpers 2. Der Betonverdrängungskörper 2 ist vorliegend zylindrisch bzw. schlauchförmig ausgestaltet. Der Betonverdrängungskörper 2 weist ein zylindrisches Innenteil 4 umfassend Biokohle auf. Das zylindrische Innenteil 4 kann neben Biokohle beispielsweise auch Bindemittel oder andere Zuschlagsstoffe umfassen. Das zylindrische Innenteil 4 wird von einer Umhüllung 6 ummantelt, wobei die Umhüllung 6 beispielsweise von einer Folie gebildet wird. Die Umhüllung 6 kann ebenfalls von einer Oberflächenbeschichtung gebildet werden, welche im Rahmen einer Oberflächenbehandlung aufgetragen werden kann.

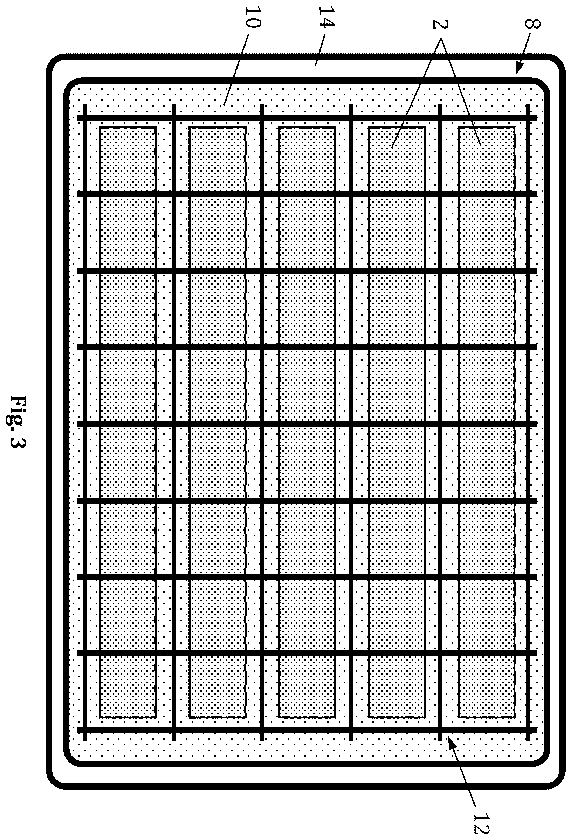

Fig. 2 zeigt eine Querschnittsansicht eines Ausführungsbeispiels eine Betonteils 8. Fig. 3 zeigt eine Draufsicht des in Fig. 2 dargestellten Ausführungsbeispiels des Betonteils 8.

Das Betonteil 8 ist vorliegend im Wesentlichen quaderförmig ausgebildet und weist eine Mehrzahl an Betonverdrängungskörpern 2 auf. Die Betonverdrängungskörper 2 sind vorliegend analog zu dem in Fig. 1 dargestellten Betonverdrängungskörper 2 ausgebildet.

Die Betonverdrängungskörper 2 sind zwischen zwei Bewehrungslagen 12 angeordnet, wobei die Bewehrungslagen 12 vorliegend gitterförmig aus Bewehrungsmatten gebildet werden. Sowohl die Betonverdrängungskörper 2 als auch die Bewehrungslagen 12 sind in Beton 10 eingegossen. Das Betonteil 8 ist in einem Schalkörper 14 angeordnet.

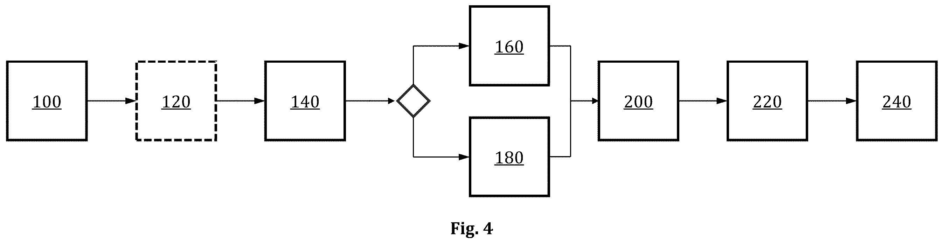

Fig. 4 zeigt ein Flussdiagramm eines ersten Ausführungsbeispiels eines Verfahrens zum Herstellen eines Betonteils 8. Zunächst erfolgt ein Bereitstellen 100 von Biokohle. Anschließend erfolgt ein optionales Vermischen 120 von Bindemittel und/oder Zusatzstoffen mit der Biokohle. Nachfolgend erfolgt ein Verpressen 140 der Biokohle und potenziell weiteren Bestandteilen, wie bspw. Bindemittel und/oder Zuschlagsstoffen, zu zumindest einem Betonverdrängungskörper 2.

Daraufhin kann die Oberfläche der verpressten Biokohle in Schritt 160 einer Oberflächenbehandlung unterzogen werden und/oder in Schritt 180 in eine Umhüllung 6 eingepresst werden.

Anschließend wird der zumindest eine Betonverdrängungskörper 2 in einem nächsten Schritt 200 in eine Schalung 14 eingelegt und fixiert. In einem nachfolgenden Schritt 220 wird Beton 10 in die Schalung 14 eingebracht. Schließlich härtet der in der Schalung befindliche Beton 10 in einem letzten Schritt 240 zu einem Betonteil 8 aus.

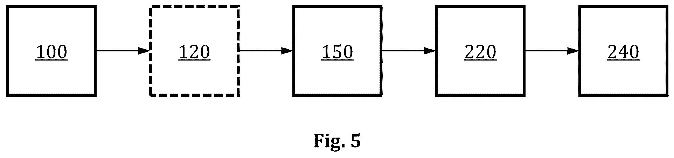

Fig. 5 zeigt ein Flussdiagramm eines zweiten Ausführungsbeispiels eines Verfahrens zum Herstellen eines Betonteils 8. Dieses Ausführungsbeispiel eines Verfahrens unterscheidet sich dadurch von dem in Fig. 4 gezeigten Ausführungsbeispiel, dass der zumindest eine Betonverdrängungskörper 2 in Schritt 150 aus Biokohle additiv gefertigt wird.

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte ist nicht zwingend, alternative Abfolgen der Verfahrensschritte sind denkbar. Alle Offenbarungen in dieser Spezifikation sind im Hinblick auf alle Kategorien Vorrichtung, Verfahren, Computerprogramm zu verstehen, sodass beispielsweise mit der Beschreibung eines Verfahrensschritt auch eine entsprechende Vorrichtung offenbart ist, die Mittel zur Ausführung und/oder Steuerung des Verfahrensschritts umfasst, und eine entsprechende Vorrichtung, die dazu eingerichtet ist, den Verfahrensschritt zu steuern und/oder auszuführen.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichenliste

- 2: Betonverdrängungskörper
- 4: Innenteil des Betonverdrängungskörpers
- 6: Umhüllung des Betonverdrängungskörpers
- 8: Betonteil
- 10: Beton
- 12: Bewehrungslage
- 14: Schalung
- 100: Bereitstellen von Biokohle
- 120: Vermischen von Bindemittel und/oder Zusatzstoffen mit Biokohle
- 140: Verpressen der Biokohle
- 150: 3D-Drucken
- 160: Oberflächenbehandlung
- 180: Einpressen der Biokohle in eine Umhüllung
- 200: Einlegen und Fixieren
- 220: Einbringen von Beton
- 240: Aushärten

## Patentansprüche

1. Betonverdrängungskörper (2) zur Einbringung in ein Betonteil (8),
- wobei der Betonverdrängungskörper (2) Biokohle, insbesondere zumindest 70 Gew.-% Biokohle, umfasst, und
- wobei der Betonverdrängungskörper (2) als Vollmaterial ausgestaltet ist.

2. Betonverdrängungskörper (2) nach Anspruch 1,
- wobei der Betonverdrängungskörper (2) eine Dichte zwischen 1 g/cm³ und 2 g/cm³, insbesondere zwischen 1g/cm³ und 1,4 g/cm³, aufweist.

3. Betonverdrängungskörper (2) nach Anspruch 1 oder 2,
- wobei die Biokohle feine Biokohle mit einer Partikelgröße von weniger als 0,5 mm und/oder grobe Biokohle mit einer Partikelgröße zwischen 0,5 mm und 5 mm umfasst.

4. Betonverdrängungskörper (2) nach einem der Ansprüche 1 bis 3,
- wobei der Betonverdrängungskörper (2) zumindest ein Bindemittel umfasst,
- wobei das Bindemittel vorzugsweise eine natürliche und/oder eine mineralische Substanz, insbesondere Stärke, Lignin, natürliche Harze, Ton, Zement, Natriumhydroxid und/oder Kalziumhydroxid, umfasst.

5. Betonverdrängungskörper (2) nach einem der Ansprüche 1 bis 4,
- wobei der Betonverdrängungskörper (2) eine Oberflächenbehandlung aufweist, und
- wobei das Mittel zur Oberflächenbehandlung eine hydrophoben und/oder hydrophilen Substanz, insbesondere Kalziumhydroxid, Silane, Silikate, Zementleim, Polymere und/oder Naturharze, umfasst.

6. Betonverdrängungskörper (2) nach einem der Ansprüche 1 bis 5,
- wobei der Betonverdrängungskörper (2) eine Umhüllung (6), insbesondere eine im Wesentlichen vollständige Umhüllung (6), aufweist,
- wobei die Umhüllung (6) vorzugsweise eine Folie, insbesondere eine Kunststofffolie oder eine biologisch abbaubare Folie, ein Textilgewebe, ein Papierverbundstoff und/oder einer Beschichtung aus natürlichen oder synthetischen Polymeren umfasst.

7. Betonverdrängungskörper (2) nach einem der Ansprüche 1 bis 6,
- wobei der Betonverdrängungskörper (2) eine zylindrische Form, insbesondere eine zylindrische Form mit zwei im Wesentlichen parallel zueinander verlaufenden Stirnseiten, aufweist.

8. Betonteil (8), insbesondere zur Verwendung als Strukturbauteil, zur Aufnahme von Lasten, umfassend zumindest einen Betonverdrängungskörper (2) nach einem der Ansprüche 1 bis 7.

9. Betonteil (8) nach Anspruch 8,
- wobei das Betonteil (8) zumindest eine Bewehrungslage (12) umfasst.

10. Betonteil nach Anspruch 9,
- wobei das Betonteil vorzugsweise zumindest zwei Bewehrungslagen (12) umfasst, und
- wobei der zumindest eine Betonverdrängungskörper (2) zwischen den zumindest zwei Bewehrungslagen (12) angeordnet ist.

11. Verfahren zum Herstellen eines Betonteils (8), insbesondere eines Betonteils (8) nach einem der Ansprüche 8 bis 10, umfassend die Schritte:
- Bereitstellen (100) von Biokohle,
- optionales Vermischen (120) zumindest eines Bindemittels mit der Biokohle,
- Verpressen (140) der Biokohle zu zumindest einem Betonverdrängungskörper (2), insbesondere zu zumindest einem Betonverdrängungskörper (2) nach einem der Ansprüche 1 bis 7,
- Einlegen und Fixieren (200) des zumindest einen Betonverdrängungskörpers (2) in eine Schalung (14), insbesondere in eine mit zumindest zwei Bewehrungslagen (12) versehene Schalung (14),
- Einbringen von Beton (220) in die mit dem zumindest einen eingelegten und fixierten Betonverdrängungskörper (2) versehene Schalung (14), und
- Aushärten (240) des in die Schalung (14) eingebrachten Betons (10) zu einem Betonteil (8).

12. Verfahren nach Anspruch 11,
- wobei die Oberfläche, insbesondere die äußere Oberfläche, der verpressten Biokohle mit einer Oberflächenbehandlung behandelt wird.

13. Verfahren nach Anspruch 11 oder 12,
- wobei die Biokohle beim Verpressen in eine Umhüllung (6) eingepresst wird.

14. Verfahren zum Herstellen eines Betonteils (8), insbesondere eines Betonteils (8) nach einem der Ansprüche 8 bis 10, umfassend die Schritte:
- Bereitstellen (100) von Biokohle,
- optionales Vermischen (120) zumindest eines Bindemittels mit der Biokohle,
- Additive Fertigung (150), insbesondere 3D-Drucken, der Biokohle zu zumindest einem Betonverdrängungskörper (2), insbesondere zu zumindest einem Betonverdrängungskörper (2) nach einem der Ansprüche 1 bis 7, in eine Schalung (14), insbesondere in eine mit zumindest zwei Bewehrungslagen (12) versehene Schalung (14),
- Einbringen (220) von Beton (10) in die mit dem zumindest einen gedruckten Betonverdrängungskörper (2) versehene Schalung (14), und
- Aushärten des in die Schalung (14) eingebrachten Betons (10) zu einem Betonteil (8).

15. Verwendung eines Betonverdrängungskörpers (2) nach einem der Ansprüche 1 bis 7 in einem Betonteil (8), insbesondere in einem Betonteil (8) nach einem der Ansprüche 8 bis 10.
